# EUROPÄISCHE PATENTSCHRIFT

(11) **EP 0 585 725 B1**
(45) Veröffentlichungstag und Bekanntmachung des Hinweises auf die Patenterteilung: **13.03.1996**
(21) Anmeldenummer: 93113161.9
(22) Anmeldetag: 17.08.1993
(51) Int. Cl.: H02K 24/00, H01F 30/00, H01F 38/00, H01F 27/36, G01D 5/20

(54) **Resolver mit magnetischer Abschirmung**
Resolver having a magnetic shielding
Résolveur muni d'un blindage magnétique

(30) Priorität: 19.08.1992 DE 4227439
(43) Veröffentlichungstag der Anmeldung: 09.03.1994
(73) Patentinhaber: LITTON PRECISION PRODUCTS INTERNATIONAL, INC., D-85774 Unterföhring (DE)
(72) Erfinder: Pielock, Gerhard, D-81539 München (DE)
(74) Vertreter: TER MEER - MÜLLER - STEINMEISTER & PARTNER

(56) Entgegenhaltungen:
- DE-A- 3 810 037
- FR-A- 2 599 181
- GB-A- 1 347 484
- US-A- 4 864 265
- PATENT ABSTRACTS OF JAPAN vol. 10, no. 384 (E-466)(2441) 23. Dezember 1986 & JP-A-61 174 703 (PIONEER ELECTRONIC CORP.) 6. August 1986
- PATENT ABSTRACTS OF JAPAN vol. 10, no. 384 (E-466)(2441) 23. Dezember 1986 & JP-A-61 174 703

## Beschreibung

Die Erfindung betrifft einen Resolver mit magnetischer Abschirmung gegen Übersprechen auf die Resolverwicklung.

Bei Resolvern, bei denen innerhalb des Resolvergehäuses unmittelbar benachbart sowohl ein Transformator als auch die Resolverwicklungen angeordnet sind. wobei die rotorseltigen Wicklungen sowohl des Transformators als auch des eigentlichen Resolvers auf der gemeinsamen Rotorachse fixiert sind, besteht das Problem eines störenden, sogenannten "Übersprechens", d.h. die elektromagnetischen Felder des Transformators wirken als Störeinfluß auf die Resolverwicklungen. Durch geeignete Wahl des Werkstoffs und konstruktive Gestaltung des Transformatorgehäuses des Stators wird eine Abschirmung gegenüber der Resolverwicklung und dadurch eine Reduzierung des Übersprechens erreicht. Die erzielte Dämpfung wird üblicherweise in dB gemessen. In der Regel ist als Abschirmmaßnahme vorgesehen, daß ein ringförmiger Abschirmtopf aus weichmagnetischem Werkstoff die Transformatorwicklung samt Wickelkörper umgibt, um den magnetischen Fluß der Transformatorwicklung zu bündeln.

In der Praxis zeigen sich Jedoch immer noch erhebliche Probleme mit elektromagnetischen, von der Transformatorwicklung ausgehenden Störeinflüssen aber auch von Fremdfeldern auf die Rotorwicklung. Diese magnetischen Störfelder lassen sich in ausreichendem Maße nur bei sehr präziser Fertigung und einer geeigneten Auswahl und Zusammenstellung der Materialien für den weichmagnetischen Werkstoff der Abschirmung erreichen (v.g. l. FR-A- 2599181).Gleichwohl ist die Ausschußquote bzw. der Anteil der Resolver, der in der Fertigung hinsichtlich der Abschirmmaßnahmen nachzukorrigieren ist, ziemlich hoch.

Der Erfindung liegt damit die Aufgabe zugrunde, die elektromagnetischen Störfelder auf die Resolverwicklung zuverlässig und in der Serienproduktion auf unter einem Vorgabepegel der Zulassigkeit liegenden Wert zu bringen.

Die Erfindung ist bei einem Resolver mit magnetischer Abschirmung seiner Transformatorwicklung gegen Übersprechen auf die Resolverwicklung erfindungsgemäß dadurch gekennzeichnet, daß mindestens über der statorseitigen Wicklung des Transformators eine die magnetische Abschirmung umgebende weitere Abschirmung aus einem elektrisch gut leitenden, para- oder diamagnetischen Werkstoff vorgesehen ist. Letztere elektrisch gut leitende Abschirmung über der Resolverwicklung wirkt gegen Fremdfelder sinngemäß.

Vorteilhafterweise umschließt die weitere Abschirmung die kreisringtopfförmige magnetische Abschirmung passgenau, so daß ein räumlich kompakter Aufbau erreicht wird. Als geeigneter Werkstoff, der sich in der Fertigung gut bearbeiten läßt und vergleichsweise preiswert ist, hat sich Aluminium bzw. eine Aluminiumlegierung erwiesen.

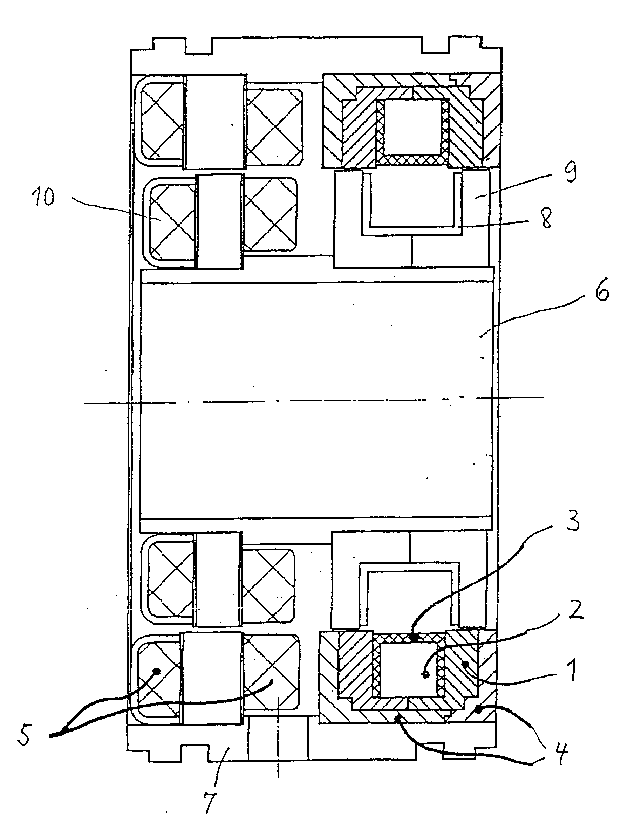

Die Erfindung und vorteilhafte Einzelheiten werden nachfolgend unter Bezug auf die Zeichnung in einerbeispieisweisen Ausführungsform näher er1äutert.

Die **einzige** Figur zeigt in schematischer Schnittdarstellung den im Zusammenhang mit der Erfindung wesentlichen Teil eines Resolvers.

Innerhalb eines Resolvergehäuses 7 befindet sich, aufgesetzt auf die (nicht dargestellte) Resolverachse, eine mit der Achse fest verbundene Buchse 6 die eine rotorseitige, nur schematisch angedeutete Transformatorwicklung 8 mit weichmagnetischer Abschirmung 9 sowie eine rotorseitige Resolverwicklung 10 trägt.

Der Wickelkörper 3 der Statorwicklung des Transformators ist analog zur Rotorwicklung durch eine weichmagnetische Abschirmung 1 umgeben. Die statorseitige Resolverwicklung ist mit dem Bezugshinweis 5 angegeben.

Über der vorzugsweise aus Weicheisen bestehenden Abschirmung 1 ist eine weitere Abschirmung 4 vorhanden, die die magnetische Abschirmung 1 passgenau umschließt und die aus einem elektrisch gut leitfähigen, jedoch magnetisch schlecht oder nicht leitenden, also einem para- oder diamagnetischen Werkstoff besteht. Vorzugsweise wird für die gehäuseartige Ummantelung der magnetischen Abschirmung 1 Aluminium oder eine Aluminiumlegierung verwendet; letzteres aus Preis- und Gewichtsgründen. Auch andere elektrisch leitfähige Materialien, die dem Fachmann geläufig sind, beispielsweise Messing, könnten verwendet werden.

Die weitere Abschirmung kann nicht nur über der statorseitigen Transformatorwicklung angeordnet sein, sondern sinngemäß auch - oder ausschließlich - über der statorseitigen Resolverwicklung 5.

Die gehäuseartige Ummantelung 4 bewirkt, daß Streuflüsse, die aus der weichmagnetischen Abschirmung 1 bei wechselndem Feld nach außen dringen, in derweiteren Abschirmung 4 Wirbelströme induzieren, die dem Streufluß entgegenwirken. Durch diese Maßnahme werden störende Streuflüsse gegen die Resolverwicklung 5 zumindest unter einen zulässigen Grenzwert zuverlässig minimiert.

Bei dem dargestellten Ausführungsbeispiel ist die zusätzliche Abschirmung 4 lediglich bei der Statorwicklung des Transformators vorgesehen. Als ergänzende Maßnahme könnte auch auf der Rotorseite des Transformators sowie auf der Resolver-Seite eine ähnliche zusätzliche Abschirmung vorgesehen werden.

## Patentansprüche

1. Resolver mit magnetischer Abschirmung (1) seiner Transformatorwicklung (3) gegen Übersprechen auf die Resolverwicklung (5), **dadurch gekennzeichnet**, daß mindestens über der statorseitigen Wicklung (3) des Transformators und/oder über der statorseitigen Resolverwicklung (5) eine weitere Abschirmung (4) aus einem elektrisch gut leitenden, para- oder diamagnetischen Werkstoff vorgesehen ist.

2. Resolver nach Anspruch 1, dadurch gekennzeichnet, daß eine derartige weitere Abschirmung die Resolverwicklung zumindest teilweise umschließt.

3. Resolver nach Anspruch 1 oder 2, **dadurch gekennzeichnet**, daß die weitere Abschirmung (4) die kreisringförmig gestaltete magnetische Abschirmung (1) passgenau umschließt.

4. Resolver nach Anspruch 1 oder 3, **dadurch gekennzeichnet**, daß die weitere Abschirmung (4) aus Aluminium oder einer Aluminiumlegierung gefertigt ist.

## Claims

1. Resolver, the transformer winding (3) of which has a magnetic screen (1) against crosstalk to the resolver winding (5), characterized in that a further screen (4) made of an electrically readily conductive, paramagnetic or diamagnetic material is provided at least over the stator-side winding (3) of the transformer and/or over the stator-side resolver winding (5).

2. Resolver according to Claim 1, characterized in that a further screen of this type at least partly encloses the resolver winding.

3. Resolver according to Claim 1 or 2, characterized in that the further screen (4) encloses the annularly configured magnetic screen (1) with an accurate fit.

4. Resolver according to Claim 1 or 3, characterized in that the further screen (4) is produced from aluminium or an aluminium alloy.

## Revendications

1. Résolveur muni d'un blindage magnétique (1) de son enroulement de transformateur (3) empêchant la diaphonie avec l'enroulement de résolveur (5), **caractérisé en ce** qu'il comprend au moins sur l'enroulement (3) situé du côté du stator du transformateur et/ou sur l'enroulement de résolveur (5) situé du côté du stator, un blindage supplémentaire (4) constitué d'un matériau para- ou diamagnétique bon conducteur électrique.

2. Résolveur selon la revendication 1, caractérisé en ce qu'un tel blindage supplémentaire enveloppe au moins partiellement l'enroulement de résolveur.

3. Résolveur selon la revendication 1 ou 2, caractérisé en ce que le blindage supplémentaire (4) enveloppe de manière ajustée le blindage magnétique (1) conformé en anneau de cercle.

4. Résolveur selon la revendication 1 ou 3, caractérisé en ce que le blindage supplémentaire (4) est réalisé en aluminium ou en alliage d'aluminium.
